# EUROPEAN PATENT APPLICATION

(11) **EP 4 086 986 A1**
(43) Date of publication of application: **09.11.2022**
(21) Application number: 21736157.5
(22) Date of filing: 04.01.2021
(51) Int. Cl.: H01M 4/72, H01M 4/66, H01M 4/04, H01M 50/536

(54) **RECHARGEABLE BATTERY, ELECTRODE SHEET THEREOF, AND PREPARATION METHOD FOR ELECTRODE SHEET**

(30) Priority: 03.01.2020 CN 202010009328; 03.01.2020 CN 202020013754 U
(71) Applicant: Xiamen Hithium Energy Storage Technology Co., Ltd., Xiamen, Fujian 361006 (CN)
(72) Inventor: ZHANG, Qin, Shenzhen, Guangdong 518000 (CN)
(74) Representative: DREISS Patentanwälte PartG mbB
(86) International application number: PCT/CN2021/070166
(87) International publication number: WO 2021/136551

(57) **Abstract**

The present disclosure provides a secondary battery, an electrode sheet thereof, and a preparation method for an electrode sheet, which belong to the field of secondary battery technologies. A conductive layer of a current collector in the electrode sheet of the secondary battery includes a first region and a second region. The first region has a thickness greater than a thickness of the second region. An active material layer is disposed on the second region and a part of the first region that is close to the second region. In the electrode sheet of the secondary battery, a part of the first region that is coated with no active material serves as a tab region. The tab region has a larger thickness and is configured to be connected to a tab. The second region and the part of the first region that is close to the second region serve as a coating region. The coating region is configured to be coated with an active material to form the active material layer. In this manner, an current-passing capability at the tab region and the tab is increased, and an current-passing capability of the tab region and the coating region is also increased. Thus, a conducting capability of the entire electrode sheet is improved, an internal resistance of a cell is reduced, and a 3C capacity retention rate of the cell is increased. For cells having a same volume, the cell provided by the present disclosure can be coated with more active material layer to improve an energy density of the cell.

## Description

### CROSS-REFERENCE TO RELATED APPLICATIONS

The present application claims priority to Chinese Patent Application No. 202010009328.5, entitled "SECONDARY BATTERY, ELECTRODE SHEET THEREOF, AND PREPARATION METHOD FOR ELECTRODE SHEET", and filed with China National Intellectual Property Administration on January 3, 2020, the entire disclosure of which is incorporated herein by reference.

The present application claims priority to Chinese Patent Application No. 202020013754.1, entitled "SECONDARY BATTERY AND ELECTRODE SHEET THEREOF", and filed with China National Intellectual Property Administration on January 3, 2020, the entire disclosure of which is incorporated herein by reference.

### TECHNICAL FIELD

The present disclosure relates to the field of secondary battery technologies, and more particularly, to a secondary battery, an electrode sheet thereof, and a preparation method for an electrode sheet.

### BACKGROUND

Generally, a composite current collector of a secondary battery includes an insulation layer and a conductive layer disposed on each of two sides of the insulation layer. In general, the conductive layer is divided into two regions. One region is referred to as a tab region to be connected to a metal foil (a tab). After the tab region is welded to the tab, a current on an electrode sheet is guided and collected to an electrode terminal by the tab. The other region is referred to as a coating region to be coated with an active material layer.

The inventors found that a current-passing capability between the tab region and the tab was insufficient.

### SUMMARY

The present disclosure aims to provide a secondary battery, an electrode sheet thereof, and a preparation method for an electrode sheet. The electrode sheet provided by the present disclosure can enhance a current-passing capability at a tab region and a tab and a current-passing capability of the tab region and a coating region, improve a conducting capability of the entire electrode sheet, and increase an energy density of a cell.

In a first aspect, according to an embodiment of the present disclosure, an electrode sheet of a secondary battery includes a current collector and an active material layer. The current collector includes an insulation layer and a conductive layer disposed on each of two opposite sides of the insulation layer. The conductive layer has a first region and a second region. The first region has a thickness greater than a thickness of the second region. The active material layer is disposed on the second region and a part of the first region that is close to the second region.

In the above current collector, a region connected to a tab (a part of the first region that is coated with no active material layer) is defined as the tab region. Since the first region is thicker, after the tab region is connected to the tab, a current-passing capability between the tab region and the tab can be ensured. The region coated with the active material layer (the second region and the part of the first region that is close to the second region) is defined as the coating region. Since the first region is thicker and the second region is thinner, applying the active material layer on both a part of the thicker region that is close to the thinner region and the thinner region can enhance the current-passing capability between the thinner region of the coating region and the thicker region of the coating region. In this manner, the conducting capability of the entire electrode sheet is improved, an internal resistance of a cell is reduced, and a 3C capacity retention rate of the cell is increased. In addition, since the second region has a reduced thickness, accordingly, a thickness of the active material layer formed on the second region is increased. Therefore, for cells having a same volume, the cell provided by the present disclosure can be coated with more active materials to increase an energy density of the secondary battery.

In a feasible embodiment, the active material layer extends from a boundary line between the first region and the second region onto the first region by a distance ranging from 1 mm to 5 mm.

By adopting the above distance, an effective connection can be established between the tab region and the tab. In addition, the current-passing capability between the thicker region and the thinner region of the coating region can be ensured while guaranteeing the current-passing capability of the tab and the tab region to further improve the conducting capability of the electrode sheet.

In a preferred embodiment of the present disclosure, a maximum difference between the thickness of the first region and the thickness of the second region ranges from 1 nm to 600 nm. Optionally, a maximum difference between the thickness of the first region and the thickness of the second region ranges from 200 nm to 500 nm.

Controlling the thicknesses difference between the first region and the second region within a suitable range enhances the current-passing capability between the thicker region and the thinner region of the coating region. In addition, the thickness of the active material layer on the second region is thicker.

In a preferred embodiment of the present disclosure, the second region includes a first sub-region and a second sub-region. The thickness of the first region is greater than a thickness of the second sub-region. The first sub-region is located between the first region and the second sub-region and has a thickness increasing gradually in a direction from the second sub-region to the first region. The active material layer is disposed on the second sub-region, the first sub-region, and a part of the first region that is close to the first sub-region.

Thickening the first sub-region gradually in the direction from the second sub-region to the first region can avoid the occurrence of film surface defects such as wrinkles and bulges on the conductive layer on the two sides of the current collector. In addition, coating the first sub-region with the active material layer can gradually enhance the current-passing capability of the coating region in a direction from a region away from the tab region to the tab region to increase the conducting capability of the electrode sheet. Therefore, the conducting capability of each part can be satisfying.

In a preferred embodiment of the present disclosure, a boundary line between the first region and the first sub-region is defined as a first boundary line. A boundary line between the first sub-region and the second sub-region is defined as a second boundary line. With a plane including the first boundary line and the second boundary line as a reference plane, a surface of the first sub-region facing away from the insulation layer is convex relative to the reference plane.

When satisfying the above conditions, the first sub-region having a gradually increasing thickness can provide the electrode sheet with a better current-passing capability and a higher energy density.

In a preferred embodiment of the present disclosure, the electrode sheet is a negative electrode sheet. The conductive layer includes a functional layer and a protective layer that overlap. A surface of the functional layer facing away from the protective layer is connected to a surface of the insulation layer. A thickness of the functional layer at the first region is greater than a thickness of the functional layer at the second region. A surface of the protective layer at the second region and a surface of the protective layer at the part of the first region that is close to the second region are both coated with a negative active material layer.

The functional layer mainly plays an electric conducting role, and the protective layer mainly plays a role of protecting the functional layer. The functional layer is of a non-uniform thickness layer structure, and is more conducive to improving the conducting capability of the entire electrode sheet.

In a preferred embodiment of the present disclosure, the thickness of the functional layer at the first region ranges from 100 nm to 2,500 nm, and the thickness of the functional layer at the second region ranges from 50 nm to 2,000 nm. Optionally, the thickness of the functional layer at the first region ranges from 600 nm to 1,500 nm, and the thickness of the functional layer at the second region ranges from 300 nm to 1,000 nm.

By limiting the thickness of the functional layer at the first region and the thickness of the functional layer at the second region respectively, the thinner region (the second region) can carry the active material layer and ensure a certain current-passing capability. Also, the tab region of the first region can be firmly connected to the tab to ensure the current-passing capability of the tab and the tab region.

In a preferred embodiment of the present disclosure, the second region includes a first sub-region and a second sub-region. The thickness of the first region is greater than a thickness of the second sub-region. The first sub-region is located between the first region and the second sub-region and has a thickness increasing gradually in a direction from the second sub-region to the first region. The negative active material layer is disposed on a surface of the protective layer at the second sub-region, a surface of the protective layer at the first sub-region, and a surface of the protective layer at a part of the first region that is close to the first sub-region.

With the above structure, it is possible to avoid the occurrence of film surface defects such as wrinkles and bulges on the functional layer on the two sides of the current collector and the protective layer disposed on the functional layer.

In a preferred embodiment of the present disclosure, a bonding layer is further disposed between the functional layer and the insulation layer.

The bonding layer helps enhance connection strength between the functional layer and the insulation layer and prevent the functional layer from peeling off from the insulation layer.

In a second aspect, according to an embodiment of the present disclosure, a secondary battery including the electrode sheet of the secondary battery is provided.

Using the electrode sheet with the enhanced current-passing capability reduces the internal resistance of the cell, improves the 3C capacity retention rate of the cell, obtains the secondary battery having a higher energy density, and lowers fabrication costs of the secondary battery.

In a third aspect, according to an embodiment of the present disclosure, a preparation method for the electrode sheet of the secondary battery is provided, including: forming the conductive layer on each of two sides of the insulation layer, the conductive layer having the first region and the second region, wherein the thickness of the first region is greater than the thickness of the second region; and coating the second region and the part of the first region that is close to the second region with the active material layer.

Controlling the thickness of the first region to be greater than the thickness of the second region, and applying the active material layer on the second region and the part of the first region that is close to the second region allow a part of the first region that is coated with no active material to be connected to the tab. A large thickness of the conductive layer (the tab region) connected to the tab ensures the current-passing capability between the tab region and the tab. Coating the thinner region (the second region) and a part of the thicker region (the part of the first region that is close to the second region) with the active material layer can enhance the current-passing capability between the thinner region of the coating region and the thicker region of the coating region. In this manner, the conducting capability of the entire electrode sheet is improved, the internal resistance of the cell is reduced, and the 3C capacity retention rate of the cell is increased. In addition, since the second region has a smaller thickness, accordingly, the thickness of the active material layer on the second region is increased. Therefore, for cells having a same volume, the cell provided by the present disclosure can be coated with more active materials to improve the energy density of the secondary battery.

In a preferred embodiment of the present disclosure, the preparation method further includes disposing a baffle between a metal source and a part of the insulation layer corresponding to the first region and the second region. The baffle includes a shielding portion and a hollow portion. An occupation ratio of the hollow portion of the baffle corresponding to the first region is greater than an occupation ratio of the hollow portion of the baffle corresponding to the second region.

The metal source is converted into metal atoms that pass through the hollow portion of the baffle and form the conductive layer on the insulation layer. Since the occupation ratio of the hollow portion of the baffle corresponding to the first region is greater than the occupation ratio of the hollow portion of the baffle corresponding to the second region, more metal atoms can pass through the baffle at the first region and relatively fewer metal atoms pass through the baffle at the second region. Therefore, the thickness of the conductive layer at the first region is greater than the thickness of the conductive layer at the second region.

In a preferred embodiment of the present disclosure, an occupation ratio of the hollow portion of the baffle gradually increases in a direction from a part of the baffle corresponding to the second region to a part of the baffle corresponding to the first region.

Since the occupation ratio of the hollow portion changes gradually, it is possible to form a region having a gradually increasing thickness between the thicker region and the thinner region to form the electrode sheet having a high conducting capability.

### BRIEF DESCRIPTION OF DRAWINGS

In order to clearly explain technical solutions of embodiments of the present disclosure, drawings used in description of embodiments will be briefly described below. It should be understood that the following accompanying drawings illustrate only some embodiments of the present disclosure and therefore should not be construed as limitations on the scope. Based on these drawings, other related drawings can be obtained by those skilled in the art without creative effort, and shall also fall within the protection scope of the present disclosure.
FIG. 1 is a schematic diagram of a first layered configuration of a negative electrode sheet according to an embodiment of the present disclosure;
FIG. 2 is a schematic diagram of a first region division of a negative current collector according to an embodiment of the present disclosure;
FIG. 3 is a schematic diagram of a first configuration of a baffle according to an embodiment of the present disclosure;
FIG. 4 is a schematic diagram of a second layered configuration of a negative electrode sheet according to an embodiment of the present disclosure;
FIG. 5 is a schematic diagram of a second region division of a negative current collector according to an embodiment of the present disclosure;
FIG. 6 is a cross-sectional view of a surface, facing away from an insulation layer, of a functional layer of a negative current collector according to an embodiment of the present disclosure;
FIG. 7 is a schematic diagram of a second configuration of a baffle according to an embodiment of the present disclosure;
FIG. 8 is a schematic diagram of a third layered configuration of a negative electrode sheet according to an embodiment of the present disclosure; and
FIG. 9 is a schematic diagram of a third region division of a negative current collector according to an embodiment of the present disclosure.

Reference numerals: 10-negative current collector; 11-insulation layer; 12-bonding layer; 13-functional layer; 14-protective layer; 15-first region; 16-second region; 161-first sub-region; 162-second sub-region; 20-active material layer; 30-baffle; 31-hollow portion; 32-shielding portion.

### DESCRIPTION OF EMBODIMENTS

In order to make objects, technical solutions, and advantages of embodiments of the present disclosure more apparent, the technical solutions according to the embodiments of the present disclosure will be described below with reference to the accompanying drawings according to the embodiments of the present disclosure.

A secondary battery includes an electrode assembly and a housing. The housing includes a housing body and a top cover plate. The electrode assembly is disposed within the housing body. The top cover plate is mounted on the housing body. A positive terminal and a negative terminal are fixed on the top cover plate. The electrode assembly includes electrode sheets of the secondary battery. Here, the electrode sheets of the secondary battery include a positive electrode sheet and a negative electrode sheet. A current on the positive electrode sheet is collected onto the positive terminal through a first tab. A current on the negative electrode sheet is collected onto the negative terminal through a second tab. The first tab is made of a material including, but not limited to, aluminum. The second tab is made of a material including, but not limited to, nickel, nickel-plated copper, etc.

A current collector in each of the positive electrode sheet and the negative electrode sheet includes an insulation layer and a conductive layer located on each of two sides of the insulation layer. The conductive layer is divided into a coating region and a tab region. The coating region is configured to be coated with an active material to form an active material layer. The tab region is configured to be connected to the tab. The inventors found that an inadequate electric conducting capability of the electrode sheet and a low energy density of a cell in the related art may be resulted from a poor efficiency of collecting a current on the positive electrode sheet to the positive terminal and a poor efficiency of collecting a current on the negative electrode sheet to the negative terminal when a thickness of the tab region of the conductive layer is equal to a thickness of the coating region of the conductive layer. Specifically, the inventors found that in a case where the thickness of the tab region of the conductive layer is equal to the thickness of the coating region of the conductive layer, suppose that both the tab region and the coating region have a small thickness, the current-passing capability at a position where the tab region is connected to the tab is inadequate; and suppose that both the tab region and the coating region have a large thickness, the current-passing capability of the coating region is too strong, causing a waste of material, leading to a poor current collecting capability, and further, leading to the inadequate conducting capability of the electrode sheet and the low energy density of the cell.

Therefore, to improve the conducting capability of the electrode sheet and the energy density of the cell, i.e., specifically, to better collect the current on the positive electrode sheet to the positive terminal and the current on the negative electrode sheet to the negative terminal, and to avoid an over design of the current-passing capability of the coating region, the inventors modified the structures of the positive electrode sheet and the negative electrode sheet. The positive electrode sheet and the negative electrode sheet (the electrode sheets of the secondary battery include the positive electrode sheet and the negative electrode sheet) are modified by a same principle. The following description is made by taking the negative electrode sheet as an example. A specific modification manner is described below.

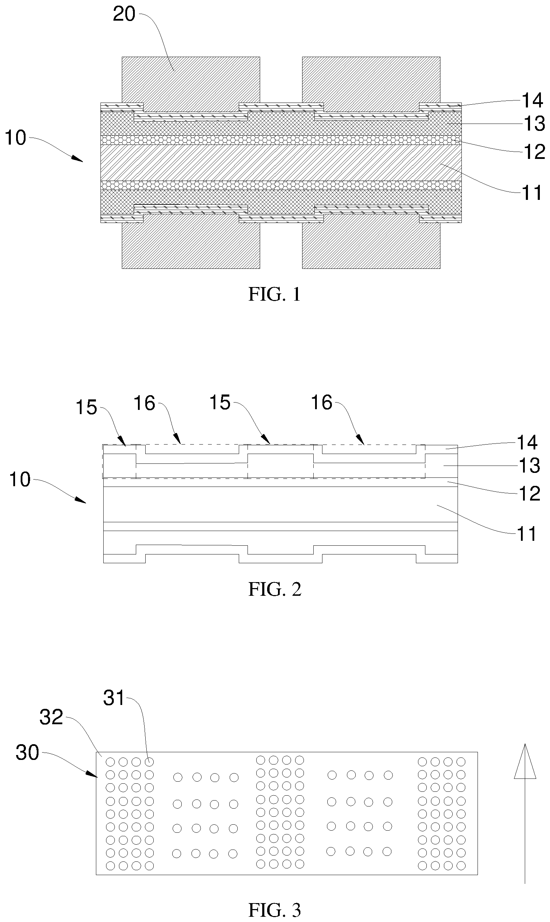

Referring to FIG. 1 to FIG. 8, a preparation method for the negative electrode sheet includes the following steps.

In step S10, an insulation layer 11 (a base film) is provided. Here, the insulation layer 11 is a flexible film material and serves as a basic support.

Optionally, the insulation layer 11 (base film) may be made of currently available materials such as polypropylene (PP), a biaxially oriented polypropylene film (BOPP), biaxially and synchronously oriented BOPP, polyethylene (PE), O-phenylphenol (OPP), polyethylene terephthalate (PET), polyimide (PI), polystyrene (PS), polyphenylenesulphide (PPS), cast polypropylene (CPP), polyethylene naphthalate two formic acid glycol ester (PEN), polyvinyl chloride (PVC), a non-woven fabric, etc.

The insulation layer 11 may have a thickness ranging from 1.2 µm to 12 µm. Further, the thickness of the insulation layer 11 may range from 2 µm to 6 µm. For example, the thickness of the insulation layer 11 is any value between 1.2 µm and 12 µm, e.g., 1.2 µm, 2 µm, 4 µm, 6 µm, or 12 µm, or a value range defined by any two values between 1.2 µm and 12 µm.

In step S20, a bonding layer 12 is disposed on each of two sides of the insulation layer 11. Here, the bonding layer 12 may have a thickness ranging from 1 nm to 100 nm. Optionally, the thickness of the bonding layer 12 may be from 3 nm to 40 nm. For example, the thickness of the bonding layer 12 is any value between 1 nm and 100 nm, e.g., 2 nm, 3 nm, 10 nm, 40 nm, or 100 nm, or a value range defined by any two values between 1 nm and 100 nm. In other embodiments, no bonding layer 12 may be provided.

Optionally, the bonding layer 12 may be deposited on a surface of the insulation layer 11 through deposition. A method for depositing the bonding layer 12 may include magnetron sputtering, crucible high-frequency heating evaporation, resistance heating evaporation, electron gun-accelerated electron beam thermal evaporation, and chemical vapor deposition, as long as the bonding layer can be formed on each of the two sides of the insulation layer.

In addition, it should be noted that, forming the bonding layer through the deposition according to the embodiments of the present disclosure is only an example, and it is not intended to mean that only the deposition could be used. Other methods that can form the bonding layer can also be used, e.g., impregnation, spraying, coating, etc. The embodiments of the present disclosure are not limited in this regard, and a method falls within the protection scope of the present disclosure as long as the method is capable of forming the bonding layer 12.

The bonding layer 12 may be a metallic layer or a non-metallic layer. When the bonding layer 12 is the metallic layer, the metallic layer may be a metal cladding. The metal cladding may be made of a raw material including any one of Ni, Cr, an Ni alloy, or a Cr alloy. For example, the bonding layer 12 is a metal Ni cladding, a metal Cr cladding, an Ni alloy cladding, or a Cr alloy cladding.

When the bonding layer 12 is the Ni alloy cladding, the Ni alloy may be an NiCu alloy, an NiCr alloy, or an NiV alloy. Further, when the Ni alloy cladding is the NiCu alloy cladding, the NiCu alloy consists of, in mass percent, 20% to 40% Ni and 60% to 80% Cu. When the Ni alloy cladding is an NiCr alloy cladding, the NiCr alloy consists of, in mass percent, 10% to 30% Ni and 70% to 90% Cr. When the Ni alloy cladding is the NiV alloy, the NiV alloy consists of, in mass percent, 80% to 95% Ni and 5% to 20% V.

When the bonding layer 12 is the Cr alloy cladding, the Cr alloy may be a CrCu alloy, a CrV alloy, or a CrCo alloy. Further, when the Cr alloy cladding is the CrCu alloy, the CrCu alloy consists of, in mass percent, 10% to 40% Cr and 60% to 90% Cu. When the Cr alloy cladding is the CrV alloy, the CrV alloy consists of, in mass percent, 40% to 80% Cr and 20% to 60% V. When the Cr alloy cladding is the CrCo alloy, the CrCo alloy consists of, in mass percent, 60% to 90% Cr and 10% to 40% Co.

When the bonding layer 12 is the non-metallic layer, the non-metallic layer may be a non-metal cladding. The non-metal cladding may be made of a raw material including polytetrafluoroethylene (PTFE), polypropylene (PP), polyethylene (PE), SiC, Si3N4, SiOx (1.5≤x≤2), AlOy (1≤y≤1.5), AlOx, melamine, or a combination thereof.

In step S30, a functional layer 13 is formed on a surface of the bonding layer 12. The bonding layer 12 can reinforce a connection between the insulation layer 11 and the functional layer 13 and prevent the functional layer 13 from peeling off from the insulation layer 11. In the embodiments of the present disclosure, the functional layer 13 is disposed on a side of the bonding layer 12 facing away from the insulation layer 11, and mainly plays a role of electric conduction. A protective layer 14 is disposed on a side of the functional layer 13 facing away from the bonding layer 12.

FIG. 1 is a schematic diagram of a first layered configuration of a negative electrode sheet according to an embodiment of the present disclosure. FIG. 2 is a schematic diagram of a first region division of a negative current collector according to an embodiment of the present disclosure. Referring to FIG. 1 and FIG. 2, each conductive layer includes a first region 15 and a second region 16 (dashed boxes illustrated in FIG. 2 represent the first region 15 and the second region 16), and a thickness of the first region 15 is greater than a thickness of the second region 16. A purpose of a thickness difference between the first region 15 and the second region 16 is to allow the functional layer 13 to have a thickness difference at different positions. That is, a thickness of the functional layer 13 at the first region 15 is greater than a thickness of the functional layer 13 at the second region 16.

Optionally, a maximum thickness difference between the first region 15 and the second region 16 ranges from 1 nm to 600 nm. Optionally, the maximum thickness difference between the first region 15 and the second region 16 ranges from 200 nm to 500 nm. That is, a maximum thickness difference between the functional layer 13 at the first region 15 and the functional layer 13 at the second region 16 ranges from 1 nm to 600 nm. Optionally, the maximum thickness difference between the functional layer 13 at the first region 15 and the functional layer 13 at the second region 16 ranges from 200 nm to 500 nm.

Further, the thickness of the functional layer 13 at the first region 15 ranges from 100 nm to 2,500 nm, and the thickness of the functional layer 13 at the second region 16 ranges from 50 nm to 2,000 nm. Optionally, the thickness of the functional layer 13 at the first region 15 ranges from 600 nm to 1,500 nm, and the thickness of the functional layer 13 at the second region 16 ranges from 300 nm to 1,000 nm.

For example, the thickness of the functional layer 13 at the first region 15 is 600 nm, and the thickness of the functional layer 13 at the second region 16 is 300 nm; the thickness of the functional layer 13 at the first region 15 is 1,500 nm, and the thickness of the functional layer 13 at the second region 16 is 900 nm; the thickness of the functional layer 13 at the first region 15 is 1,000 nm, and the thickness of the functional layer 13 at the second region 16 is 500 nm; the thickness of the functional layer 13 at the first region 15 is 700 nm, and the thickness of the functional layer 13 at the second region 16 is 699 nm; the thickness of the functional layer 13 at the first region 15 is 800 nm, and the thickness of the functional layer 13 at the second region 16 is 600 nm; the thickness of the functional layer 13 at the first region 15 is 2,500 nm, and the thickness of the functional layer 13 at the second region 16 is 2,000 nm; or the thickness at the first region is 100 nm and the thickness at the second region is 50 nm.

In the embodiments of the present disclosure, the first region 15 alternates with the second region 16 sequentially. That is, the deposited functional layer 13 is alternately arranged in sequence to be thin, thick, thin, and thick. A wound battery or a laminated battery may be prepared.

Various configurations may be adopted to allow the thickness of the functional layer 13 at the first region 15 to be greater than the thickness of the functional layer 13 at the second region 16. The following description is made by taking three configurations as examples (however, the present disclosure is not limited to the following three configurations).

As for a first configuration, with continued reference to FIG. 1 and FIG. 2, a thickness change between the first region 15 and the second region 16 is an abrupt change. That is, the functional layer 13 at the first region 15 and the functional layer 13 at the second region 16 have a thickness difference therebetween, and the thickness difference is substantially a constant value. The thickness difference between the functional layer 13 at the first region 15 and the functional layer 13 at the second region 16 ranges from 1 nm to 600 nm. Optionally, the thickness difference between the functional layer 13 at the first region 15 and the functional layer 13 at the second region 16 ranges from 200 nm to 500 nm.

FIG. 3 is a schematic diagram of a first configuration of a baffle 30 according to an embodiment of the present disclosure. To form the functional layer 13 of the first structure, referring to FIG. 1 to FIG. 3, optionally, the baffle 30 is disposed between a metal source and a part of a composite film corresponding to the first region 15 and the second region 16, the composite film being composed of the insulation layer 11 and the bonding layer 12. The baffle 30 includes a shielding portion 32 and a hollow portion 31. An occupation ratio of the hollow portion 31 of the baffle 30 corresponding to the first region 15 is greater than an occupation ratio of the hollow portion 31 of the baffle 30 corresponding to the second region 16.

Optionally, the hollow portion 31 is of a hole structure. To simplify a manufacturing process of the baffle 30, circular holes may be defined in the baffle 30 to form the hollow portion 31. Diameters of respective circular holes are identical. Circular holes in a part of the baffle 30 corresponding to the first region 15 are evenly distributed, and circular holes in a part of the baffle 30 corresponding to the second region 16 are also evenly distributed. The number of the circular holes in the part of the baffle 30 corresponding to the first region 15 is greater than the number of the circular holes in the part of the baffle 30 corresponding to the second region 16, to form the non-uniform thickness functional layer 13.

Of course, an area of the shielding portion 32 of the baffle 30 corresponding to the first region 15 may be 0, which means that the entire baffle 30 is the hollow portion 31. That is, no baffle part is arranged to correspond to the first region 15, such that the metal source is deposited more on the bonding layer 12.

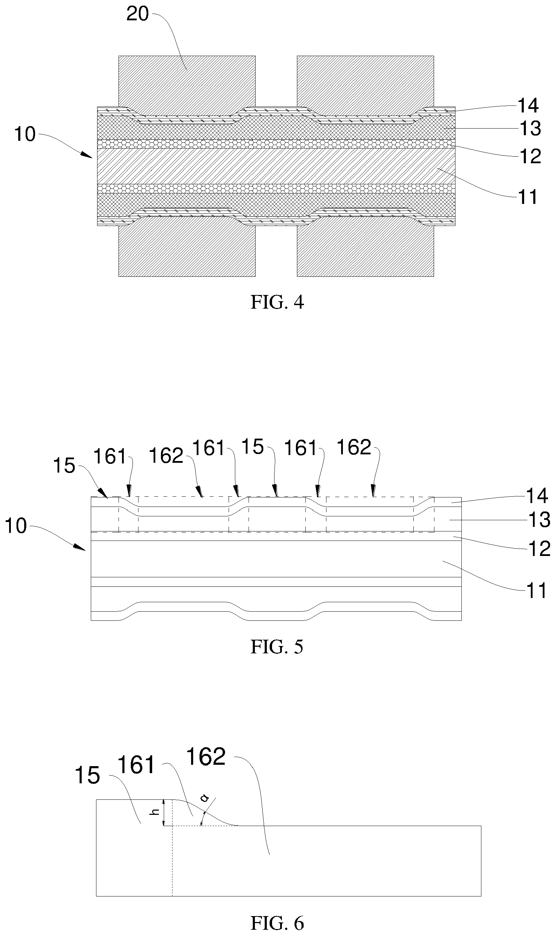

As for a second configuration, FIG. 4 is a schematic diagram of a second layered configuration of a negative electrode sheet according to an embodiment of the present disclosure, FIG. 5 is a schematic diagram of a second region division of a negative current collector according to an embodiment of the present disclosure; and FIG. 6 is a cross-sectional view of a surface, facing away from the insulation layer 11, of a functional layer 13 of a negative current collector 10 according to an embodiment of the present disclosure. Referring to FIG. 4 to FIG. 6, the thickness changes gradually from the first region 15 to the second region 16. That is, the functional layer 13 at the first region 15 and the functional layer 13 at the second region 16 have a thickness difference therebetween, but the thickness difference varies within a range. A maximum thickness difference h ranges from 1 nm to 600 nm. Optionally, the maximum thickness difference h ranges from 200 nm to 500 nm.

Optionally, the second region 16 includes a first sub-region 161 and a second sub-region 162 (dashed boxes in FIG. 4 represent the first region 15, the first sub-region 161, and the second sub-region 162, respectively). The thickness of the first region 15 is greater than the thickness of the second sub-region 162. The first sub-region 161 is located between the first region 15 and the second sub-region 162 and has a thickness increasing in a direction from the second sub-region 162 to the first region 15.

Due to the formation of the first sub-region 161, the thickness can increase gradually from the second sub-region 162 to the first region 15, which can avoid the occurrence of film surface defects such as wrinkles and bulges of the functional layer 13 at a junction between the first region 15 and the second region 16, and can also avoid the occurrence of film surface defects of the thickness protective layer 14.

The thickness difference h between the functional layer 13 at the first region 15 and the functional layer 13 at the second sub-region 162 ranges from 1 nm to 600 nm. Optionally, the thickness difference h between the functional layer 13 at the first region 15 and the functional layer 13 at the second sub-region 162 ranges from 200 nm to 500 nm. However, the functional layer 13 at the first sub-region 161 is a layer having a thickness increasing in a direction from the second sub-region 162 to the first region 15.

Further, a boundary line between the first region 15 and the first sub-region 161 is defined as a first boundary line. That is, a boundary line between the functional layer 13 at the first region 15 and the functional layer 13 at the first sub-region 161 is defined as the first boundary line. A boundary line between the first sub-region 161 and the second sub-region 162 is defined as a second boundary line. That is, a boundary line between the functional layer 13 at the first sub-region 161 and the functional layer 13 at the second sub-region 162 is defined as the second boundary line. With a plane including the first boundary line and the second boundary line as a reference plane, a surface of the first sub-region 161 facing away from the insulation layer 11 is convex relative to the reference plane.

With continued reference to FIG. 6, optionally, the surface of the first sub-region 161 facing away from the insulation layer 11 has a cross section of a curve. An included angle is substantially formed between the curve and a surface on which the second sub-region 162 is located. Here, the included angle is a maximum included angle α formed between a tangent line of the curve and the surface on which the second sub-region 162 is located. The included angle α may range from 1° to 80°. Further, the included angle α may range from 1° to 30°. For example, the included angle α may be any value between 1° and 80°, e.g., 1°, 5°, 10°, 15°, 20°, 30°, 40°, 50°, 60°, 70°, or any value within a value range defined by any two of the above values.

In other embodiments, the surface of the first sub-region 161 facing away from the insulation layer 11 may have a cross section of a straight line.

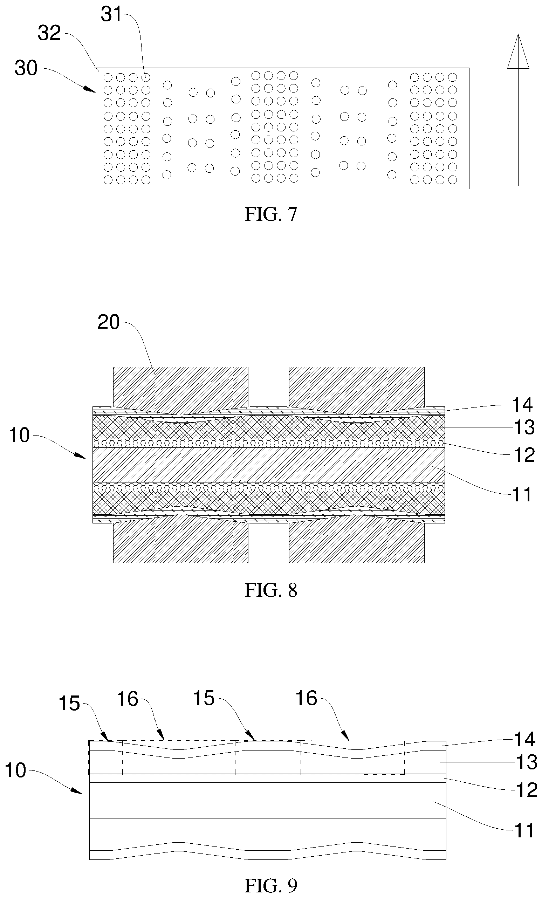

FIG. 7 is a schematic diagram of a second configuration of a baffle 30 according to an embodiment of the present disclosure. To form the functional layer 13 in the second configuration, referring to FIG. 4 to FIG. 7, optionally, the baffle 30 is disposed between the metal source and the part of the composite film corresponding to the first region 15 and the second region 16, the composite film being composed of the insulation layer 11 and the bonding layer 12. The baffle 30 includes a shielding portion 32 and a hollow portion 31. An occupation ratio of the hollow portion 31 of the baffle 30 corresponding to the first region 15 is greater than an occupation ratio of the hollow portion 31 of the baffle 30 corresponding to the second sub-region 162. An occupation ratio of the hollow portion 31 of the baffle 30 corresponding to the first sub-region 161 gradually increases in the direction from the second sub-region 162 to the first region 15.

Optionally, circular holes in a part of the baffle 30 corresponding to the first region 15 are evenly distributed, and circular holes in a part of the baffle 30 corresponding to the second sub-region 162 are also evenly distributed. The number of the circular holes in the part of the baffle 30 corresponding to the first region 15 is greater than the number of the circular holes in the part of the baffle 30 corresponding to the second sub-region 162. The number of the circular holes in the part of the baffle 30 corresponding to the first sub-region 161 gradually increases in the direction from the second sub-region 162 to the first region 15.

Of course, in the second configuration, an area of the shielding portion 32 of the baffle 30 corresponding to the first region 15 may be 0, which means that the entire baffle 30 is the hollow portion 31. That is, no baffle part is arranged to correspond to the first region 15, such that the metal source is deposited more on the bonding layer 12.

As for a third configuration, FIG. 8 is a schematic diagram of a third layered configuration of a negative electrode sheet according to an embodiment of the present disclosure, and FIG. 9 is a schematic diagram of a third region division of a negative current collector according to an embodiment of the present disclosure. Referring to FIG. 8 and FIG. 9, the thickness changes gradually from the first region 15 to the second region 16 (dashed boxes in FIG. 8 represent the first region 15 and the second sub-region 162). That is, the thickness of the functional layer 13 at the first region 15 and the thickness of the functional layer 13 at the second region 16 have a difference therebetween, and the thickness difference substantially varies at different positions of the second region 16. A maximum thickness difference ranges from 1 nm to 600 nm. Optionally, the maximum thickness difference ranges from 200 nm to 500 nm.

Optionally, a surface of the functional layer 13 at the second region 16 facing away from the bonding layer 12 is of an arc concave surface structure and the thickness of the entire second region 16 changes gradually. The maximum difference between the thickness of the functional layer 13 at the first region 15 and the thickness of the functional layer 13 at the second region 16 ranges from 1 nm to 600 nm. Optionally, the maximum difference between the thickness of the functional layer 13 at the first region 15 and the thickness of the functional layer 13 at the second region 16 ranges from 200 nm to 500 nm.

A gradual change in thickness of the second region 16 can avoid the occurrence of film surface defects such as wrinkles and bulges of the functional layer 13 at the junction between the first region 15 and the second region 16, and can also avoid the occurrence of film surface defects of the thickness protective layer 14.

To form the functional layer 13 of the third configuration, optionally, the baffle 30 is disposed between the metal source and the part of the insulation layer 11 corresponding to the first region 15 and the second region 16. The baffle 30 includes a shielding portion 32 and a hollow portion 31. An occupation ratio of the hollow portion 31 of the baffle 30 corresponding to the first region 15 is greater than an occupation ratio of the hollow portion 31 of the baffle 30 corresponding to the second region 16. The occupation ratio of the hollow portion 31 of the baffle 30 corresponding to the second region 16 gradually changes, i.e., increasing along the part of the baffle 30 corresponding to the second region 16 to the part of the baffle 30 corresponding to the first region 15.

Optionally, circular holes in the part of the baffle 30 corresponding to the first region 15 are evenly distributed and circular holes in the part of the baffle 30 corresponding to the second region 16 changes gradually. The number of the circular holes in the part of the baffle 30 corresponding to the first region 15 is greater than the number of the circular holes in the part of the baffle 30 corresponding to the second region 16. The number of the circular holes in the part of the baffle 30 corresponding to the second region 16 gradually increases in the direction from the second region 16 to the first region 15.

Of course, in the third configuration, an area of the shielding portion 32 of the baffle 30 corresponding to the first region 15 may be 0, which means that the entire baffle 30 is the hollow portion 31. That is, no baffle part is arranged to correspond to the first region 15, such that the metal source is deposited more on the bonding layer 12.

It should be noted that the provided hollow portion 31 of the baffle 30 according to the embodiments of the present disclosure has a circular hole structure. However, the hollow portion 31 is not limited to the circular hole, and square holes or through holes in other shapes are also possible. The hollow portion may have any shape as long as the metal source can be deposited on the bonding layer 12.

In the embodiments of the present disclosure, the functional layer 13 that mainly plays an electric conducting role is a metallic layer. Optionally, the functional layer 13 is a metal Cu layer. Further, the functional layer 13 may be a metal Cu cladding. To deposit the functional layer 13 on the surface of the bonding layer 12, a method for depositing the functional layer 13 is not limited in the present disclosure. Any solution that is capable of implementing the above structure shall fall within the protection scope of the present disclosure.

In step S40, a protective layer 14 is disposed on a surface of the functional layer 13 facing away from the bonding layer 12. The protective layer 14 is mainly configured to protect the functional layer 13, prevent the functional layer 13 from being oxidized or even peeling off, and avoid damages to the functional layer 13. In the embodiments of the present disclosure, the conductive layer includes the functional layer 13 and the protective layer 14 that overlap each other. Both the functional layer 13 and the protective layer 14 are made of conductive materials. Here, the thickness of the protective layer 14 ranges from 2 nm to 100 nm. Optionally, the protective layer 14 has a thickness ranging from 3 nm to 20 nm. For example, the thickness of the protective layer 14 may be any value between 2 nm to 100 nm, e.g., 2 nm, 3 nm, 10 nm, 20 nm, or 100 nm, or a value range defined by any two values between 2 nm to 100 nm.

The protective layer 14 may be a metallic layer or a non-metallic layer. When the protective layer 14 is the metallic layer, the metallic layer may be made of a raw material including any one of Ni, Cr, an Ni alloy, or a Cr alloy. For example, the protective layer 14 may be a metal Ni layer, a metal Cr layer, an Ni alloy layer, or a Cr alloy layer.

When the protective layer 14 is the Ni alloy layer, the Ni alloy layer may be an NiCu alloy layer, an NiCr alloy layer, or an NiV alloy layer. Further, when the Ni alloy layer is the NiCu alloy layer, the NiCu alloy layer is formed by an alloy consisting of, in mass percent, 20% to 40% Ni and 60% to 80% Cu. When the Ni alloy layer is the NiCr alloy layer, the NiCr alloy layer is formed by an alloy consisting of, in mass percent, 10% to 30% Ni and 70% to 90% Cr. When the Ni alloy layer is the NiV alloy layer, the NiV alloy layer is formed by an alloy consisting of, in mass percent, 80% to 95% Ni and 5% to 20% V.

When the protective layer 14 is the Cr alloy layer, the Cr alloy layer may be a CrCu alloy layer, a CrV alloy layer, or a CrCo alloy layer. Further, when the Cr alloy layer is the CrCu alloy layer, the CrCu alloy layer is formed by an alloy consisting of, in mass percent, 10% to 40% Cr and 60% to 90% Cu. When the Cr alloy layer is the CrV alloy layer, the CrV alloy layer is formed by an alloy consisting of, in mass percent, 40% to 80% Cr and 20% to 60% V. When the Cr alloy layer is the CrCo alloy, the CrCo alloy layer is formed by an alloy consisting of, in mass percent, 60% to 90% Cr and 10% to 40% Co.

When the protective layer 14 is a non-metallic layer, the non-metallic layer is a glucose complex layer or a potassium dichromate layer. For example, the protective layer 14 is a glucose complex layer or a potassium dichromate layer.

Optionally, the protective layer 14 may be deposited on a surface of the functional layer 13. A method for depositing the protective layer 14 may include magnetron sputtering, crucible high-frequency heating evaporation, resistance heating evaporation, electron gun-accelerated electron beam thermal evaporation, chemical vapor deposition, wet plating, and surface coating. The embodiments of the present disclosure are not limited to any of these examples, and a method falls within the protection scope of the present disclosure as long as the method can form the protective layer 14.

The negative current collector 10 is formed by step S10 to step S40. Since the thickness of the functional layer 13 at the first region 15 is different from the thickness of the functional layer 13 at the second region 16, the conductive layer at the first region 15 is different from the conductive layer at the second region 16. A sheet resistance of a film surface at the first region 15 ranges from 5 mΩ to 100 mΩ and a sheet resistance of a film surface at the second region 16 ranges from 10 mΩ to 300 mΩ. A resistivity of a film surface ranges from 1.8×10⁻⁸ Ω·m to 2.5×10⁻⁸ Ω·m. Both a longitudinal elongation at break and a transverse elongation at break of the film surface are equal to or greater than 3%. Both a longitudinal tensile strength and a transverse tensile strength of the film surface are equal to or greater than 200MPa. A dyne value of a surface tension test is greater than or equal to 38.

In step S50, a surface of the functional layer 13 is coated with a negative active material to form a negative active material layer 20. It should be noted that the negative current collector 10 is formed by the previous steps S10 to S40. In step S50, the negative current collector 10 is coated with the negative active material to form the negative active material layer 20, and thus a negative electrode sheet is obtained.

Here, the negative active material layer 20 is disposed on the second region 16 and a part of the first region 15 that is close to the second region 16. That is, the negative active material layer 20 is disposed on the protective layer 14 at the second region 16 and the protective layer 14 at a part of the first region 15 that is close to the second region 16. That is, the negative active material layer 20 is disposed on the protective layer 14. In addition, the active material layer 20 is disposed on the protective layer 14 corresponding to the second region 16 and the protective layer 14 corresponding to the part of the first region 15 that is close to the second region 16.

In the negative current collector 10, a region connected to a tab (a part of the first region 15 that is coated with no active material layer 20) is defined as the tab region. Since the functional layer 13 at the first region 15 is thicker, after the tab region is connected to the tab, a current-passing capability between the tab region and the tab can be ensured. A region coated with the active material layer 20 (the second region 16 and the part of the first region 15 that is close to the second region 16) is defined as a coating region. Since the functional layer 13 at the first region 15 is thicker and the functional layer 13 at the second region 16 is thinner, applying the active material layer 20 on a part of the thicker region that is close to the thinner region and the thinner region can enhance the current-passing capability between the thinner region of the coating region and the thicker region of the coating region. In this manner, the conducting capability of the entire electrode sheet can be improved to increase an energy density of the secondary battery.

Optionally, the negative active material layer 20 extends from a boundary line between the first region 15 and the second region 16 onto the first region 15 by a distance ranging from 1 mm to 5 mm. For example, the negative active material layer 20 extends from the boundary line between the first region 15 and the second region 16 onto the first region 15 by a distance of any value between 1 mm to 5 mm, e.g., 1 mm, 2 mm, 3 mm, 4 mm, or 5 mm, or in a range defined by any two values in the range of 1 mm to 5 mm.

By adopting the above distance, an effective connection can be established between the tab region and the tab. In addition, the current-passing capability between the thicker region and the thinner region of the coating region can be ensured while guaranteeing the current-passing capability between the tab and the tab region to further improve the conducting capability of the electrode sheet.

Further, a surface of the negative active material layer 20 facing away from the protective layer 14 is a flat surface.

When the negative active material layer 20 corresponds to the first configuration in step S30, the negative active material layer 20 is disposed on the protective layer 14 at the second region 16 and the protective layer 14 at a part of the first region 15 that is close to the second region 16. In addition, a thickness of the negative active material layer 20 changes abruptly from the second region 16 to the first region 15. That is, the thickness of the negative active material layer 20 decreases abruptly from the second region 16 to the first region 15.

When the negative active material layer 20 corresponds to the second configuration in step S30, the second sub-region 162, the first sub-region 161, and a part of the first region 15 that is close to the first sub-region 161 are coated with the active material layer 20. The negative active material layer 20 is disposed on the protective layer 14 at the second sub-region 162, the protective layer 14 at the first sub-region 161, and the protective layer 14 at a part of the first region 15 that is close to the first sub-region 161. In addition, the thickness of the negative active material layer 20 gradually changes from the second sub-region 162 to the first region 15, i.e., decreases from the second sub-region 162 to the first region 15, Also, providing the first sub-region 161 with the active material layer 20 can allow the current-passing capability of the coating region to increase in a direction from a region away from the tab region to the tab region to enhance the conducting capability of the electrode sheet. Therefore, the conducting capability of each part can be satisfying.

When the negative active material layer 20 corresponds to the third configuration in step S30, the negative active material layer 20 is disposed on the protective layer 14 at the second region 16 and the protective layer 14 at a part of the first region 15 that is close to the second region 16. In addition, the negative active material layer 20 gradually changes at the second region 16, and the thickness of the negative active material layer 20 gradually decreases at the second region 16. A surface of the negative active material layer 20 in contact with the protective layer 1 is of an arc surface structure. In this manner, the current-passing capability of the coating region in a direction from a region away from the tab region to the tab region is gradually enhanced to enhance the conducting capability of the electrode sheet. Therefore, the conducting capability of each part can be satisfying.

In the embodiments of the present disclosure, the negative active material layer 20 may be formed on the surface of the protective layer 14 by spraying a slurry with a coating die head. In this manner, the surface of the protective layer 14 is partially coated with the negative active material to form the negative active material layer 20.

Provided that the electrode sheet has the same thickness, due to a smaller thickness of the current collector at the second region 16, a thickness of the negative active material layer 20 at the second region 16 may be increased to increase the energy density of the cell. The larger thickness of the current collector at the first region 15 can facilitate the connection of the tab, enhance the connection strength between the tab and the tab region, and enhance the current-passing capability of the tab region and the tab. Since the negative active material layer 20 is disposed on the protective layer 14 at the second region 16 and the protective layer 14 at a part of the first region 15 that is close to the second region 16, the current-passing capability at the junction between the first region 15 and the second region 16 can be improved, conducting performance of the entire electrode sheet can be enhanced, the internal resistance of the cell can be reduced, and the 3C capacity retention rate of the cell can be increased.

Therefore, preparing a secondary battery with the above-mentioned negative electrode sheet lowers costs of the prepared secondary battery by 3% to 30% and increases the energy density of the cell by 0.5% to 2%.

### Example 1

A preparation method for a negative electrode sheet includes the following steps.
(1) A PET film having a thickness of 3.2 µm was used as the insulation layer 11 (a base film).
(2) The bonding layer 12 was disposed on two sides of the insulation layer 11. NiCr was selected as a material for forming the bonding layer 12. The NiCr alloy consisted of 80% Ni and 20% Cr. The NiCr alloy was made into a target material for magnetron sputtering. A base film roll material was placed in a vacuum deposition machine. A vacuum chamber was sealed and vacuumed gradually until a vacuum level reached 5×10⁻³ Pa. The magnetron sputtering was performed with a charge of 500 SCCM of Argon (Ar) at a speed of 20 m/min to 30 m/min, a target power of 40 Kw, and an operating vacuum of 3×10⁻¹ Pa, to form a 4 nm thickness cladding, i.e., the bonding layer 12 on a moving base film.
(3) The functional layer 13 was formed on the surface of the bonding layer 12. A film roll material having the bonding layer 12 was placed into a double-sided vacuum deposition machine. A vacuum chamber was sealed and vacuumed gradually until a vacuum level <5×10⁻² Pa. Crucible high-frequency heating evaporation was adapted to heat copper having a purity ≥99.9%. In an evaporation coating region, a water-cooled baffle satisfying a width requirement of the roll material was disposed between a film and an evaporation source in the evaporation deposition region (the water-cooled baffle is the baffle 30 of the first configuration in the above-mentioned three configurations of baffles 30. The roll material was conveyed, relative to the baffle 30, in a direction indicated by an arrow in FIG. 3). The film was conveyed at a speed of 300 m/min. A heating power of a crucible was gradually increased. The copper was melted and evaporated continuously in the evaporation source to form a copper cladding on a surface of the film deposited with the bonding layer 12. Due to the presence of the baffle, 25 nm of copper was deposited each time on the first region 15 and 20 nm of copper was deposited each time on the shielded second region. The non-uniform thickness functional layer 13 was obtained by repeating the above operations 40 times. A thickness of the functional layer 13 at the first region 15 was 600 nm and a thickness of the functional layer 13 at the second region 16 was 300 nm.
(4) The protective layer 14 was disposed on a surface of the functional layer 13 facing away from the bonding layer 12. The protective layer 14 was a non-metallic layer. The non-metallic layer was a potassium dichromate layer. A method for depositing the protective layer 14 included placing the roll material having the functional layer 13 into a roll-to-roll wet plating device or apparatus. The wet plating device in step S30 may include the roll-to-roll wet plating apparatus. The material was immersed in a solution in a solution tank by conveying the filming through winding. Potassium dichromate was dissolved in an appropriate concentration in the solution in the solution tank. The winding and unwinding speeds, current, concentration, pH value, and temperature were adjusted to appropriate values to form a layer of cladding, i.e., the protective layer 14, on the surface of the functional layer 13.
(5) The protective layer 13 was coated with a negative active material to form the negative active material layer 20, and thus a negative electrode sheet was obtained. The negative active material layer 20 extended from the boundary line between the first region 15 and the second region 16 onto the first region 15 by a distance of 3 mm.

### Example 2

(1) A BOPP film having a thickness of 3.6 µm was used as the insulation layer 11 (the base film).
(2) The bonding layer 12 was disposed on two sides of the insulation layer 11. AlOx (1<x≤ 1.5) was selected as a material for forming the bonding layer 12. A base film roll material was placed in a vacuum deposition machine. A vacuum chamber was sealed and vacuumed gradually until a vacuum level <5×10⁻² Pa. Resistance heating was used to heat an evaporation source. An oxygen feeding structure was obtained by an oxygen supply mechanism adjacent to the evaporation source, or between the evaporation source and a drum-attached film surface, or adjacent to a main drum to introduce compressed oxygen, and oxygen feeding volume was adjusted properly. A raw material for evaporation of the evaporation source was metal aluminum filaments having a purity ≥99.9%. The winding and unwinding speeds were adjusted properly. Evaporated atoms reacted with oxygen and formed a layer of AlOx (1≤x≤1.5), i.e., the bonding layer 12, on the moving base layer.
(3) The functional layer 13 was formed on the surface of the bonding layer 12. A film roll material deposited with the conductive bonding layer 12 was placed in a roll-to-roll wet plating device. A sheet resistance of a film surface of the conductive bonding layer 12 ranged from 0.5Ω to 1 Q. A water-cooled baffle satisfying a width requirement of the roll material was disposed in a plating solution tank for wet plating (a configuration of the water-cooled baffle is the same as the second configuration of baffle 30 in the above-mentioned three configurations of baffles 30. Here, the roll material was conveyed, relative to the baffle 30, in a direction indicated by an arrow in FIG. 7). The winding and unwinding speeds, current, copper ion concentration, brightener concentration, an auxiliary agent concentration, pH value, and electrolyte temperature were adjusted to appropriate values. 600 nm of copper was deposited each time at the first region and 300 nm of copper was deposited each time at a region shielded by the baffle.
(4) The protective layer 14 was formed on a surface of the functional layer 13 facing away from the bonding layer 12. The roll material having the functional layer 13 was placed in a roll-to-roll surface coating device or apparatus. The roll-to-roll surface coating apparatus may be included in the device in step S30 or may be a separate set of devices. The material was conveyed through the coating apparatus by winding the material. The coating apparatus uniformly coated the surface of the functional layer 13 with an organic material, which had antioxidant properties and had an appropriate concentration. The winding and unwinding speeds were adjusted properly, and a coated layer, i.e., the protective layer 14, was formed on the surface of the functional layer 13.
(5) The negative current collector 10 was coated with a negative active material to form the negative active material layer 20, and thus a negative electrode sheet was obtained. The negative active material layer 20 extended from the boundary line between the first region 15 and the second region 16 onto the first region 15 by a distance of 3 mm.

### Example 3

A difference between Example 3 and Example 2 is that a configuration of the water-cooled baffle used in step (3) of a preparation method provided in Example 3 is the same as the third configuration of baffle 30 among the above-mentioned three configurations of baffles 30. Here, the roll material was conveyed, relative to the baffle 30, in the direction indicated by the arrow in the figure. Other steps of the method provided in Example 3 were the same as those described in Example 2.

### Comparison Example 1

A difference between Comparison Example 1 and Example 1 is that during coating with the active material to form the active material layer 20 in step (5) of a preparation method provided in Comparison Example 1, only the second region 16 was coated, and no coating was performed on the first region 15.

### Experimental Example

To test performances of negative electrode sheets provided in Example 1 to Example 3 and in Comparison Example 1, cells were prepared first. This experiment used an aluminum housing having an inner cavity volume of 300 cm³ to prepare the cell.

A same formula was used for each group of positive and negative electrodes.

Negative electrode sheet preparation: the negative electrode sheet provided in each of Example 1 to Example 3 and Comparison Example 1 was used. After drying, cold pressing, edge trimming, stripping, and cutting were carried out on the negative electrode sheet. A negative slurry for the negative electrode sheet was prepared by mixing graphite, conductive carbon, butadiene rubber, and sodium carboxymethyl cellulose uniformly in water in a mass ratio of 97: 0.7: 1.5: 0.8.

Positive electrode sheet preparation: a positive active material, conductive acetylene black, and polyvinylidene fluoride were mixed uniformly in NMP in a mass ratio of 97: 1.5: 1.5, and then applied on an aluminum foil of 14 um. After drying, cold pressing, edge trimming, stripping, and cutting were carried out.

The positive electrode sheet, the negative electrode sheet, and a separator were assembled into a battery, loaded into the aluminum housing, and tested for capacity, internal resistance, and rate performance after baking, electrolyte injection, sealing, and formation.

Here, a performance testing method of the cell is described as below.

Internal resistance: a HIOKI internal resistance meter was adopted to test internal resistance of a 3.85V rechargeable cell.

Capacity: the cell was charged to 4.2V at a 1C rate, and then charged at a constant voltage until a current was smaller than or equal to 0.05C. The cell was let stand for 5 minutes, and discharged to 3.0V at the 1C rate at a constant current to obtain a 1C capacity C1. After that, the cell was charged to 4.2V at the 1C rate and charged at a constant voltage until the current is smaller than or equal to 0.05C. The cell was let stand for 5 minutes, and discharged to 3.0V at a 3C rate at a constant current to obtain a 3C capacity C3. A capacity retention rate of the 3C rate= C3/C1×100%. After testing, Table 1 was obtained.

**Table 1 Cell performance**

| | Internal resistance of cell mΩ | 3C capacity retention rate of cell |
|---|---|---|
| Example 1 | 31 | 78% |
| Example 2 | 25 | 83% |
| Example 3 | 23 | 88% |
| Comparison Example 1 | 32 | 75% |

As can be seen from Table 1, compared with the cell in Comparison Example 1, the cell in each of Example 1 to Example 3 showed a reduced internal resistance and an increased 3C capacity retention rate, indicating that a battery prepared with the negative electrode sheet provided by the present disclosure has better performance.

Of course, the positive electrode sheet can also be improved in the above manner. By designing a non-uniform thickness conductive layer of the positive electrode sheet and a manner of setting the positive active material layer, a cell having better performance can be obtained.

According to the above description, the electrode sheet of the secondary battery and the preparation method for the electrode sheet provided in the present disclosure can provide the following advantageous effects.
(1) The larger thickness of the functional layer 13 at the first region 15 increases the connection strength between the tab and the tab region (a part of the first region 15) and enhances the current-passing capability between the tab region and the tab.
(2) The functional layer 13 at the second region 16 has a smaller thickness. A reduced thickness of the functional layer 13 at most of the coating region (the second region 16) can reduce an amount of raw materials used to prepare the functional layer 13 at the second region 16 and lower the costs of the cell by 3% to 30%.
(3) For cells having the same volume, the thickness of the functional layer 13 at the second region 16 is reduced, and accordingly, the thickness of the active material layer 20 formed at the second region 16 is increased to accommodate more active material materials and thus, increase the energy density of the cell by 0.5% to 2%.
(4) Since the thinner second region 16 and the part of the thicker first region 15 that is close to the second region 16 are both coated with the active material to form the active material layer 20, the current-passing capability between the thinner region of the coating region and the thicker region of the coating region is enhanced. In this manner, the conducting capability of the entire electrode sheet is improved, an internal resistance of the cell is reduced, and a 3C capacity retention rate of the cell is increased.
(5) With the setting of the first sub-region 161, the thickness of the functional layer 13 changes gradually from the second sub-region 162 to the first region 15, which can avoid the occurrence of defects such as wrinkles and bulges at the junction between the first region 15 and the second region 16, and improve the conducting performance of the obtained electrode sheet.

The above embodiments are only a part of the embodiments of the present disclosure, and are not intended to limit the present disclosure. For those skilled in the art, various changes and variations can be made to the present disclosure. Any modification, equivalent replacement, improvement, etc., made within the ideas and principles of the present disclosure shall fall within the protection scope of the present disclosure.

### Industrial Applicability

The electrode sheet provided by the present disclosure has an increased current-passing capability at the tab region and the tab and an increased current-passing capability of the tab region and the coating region, which improves the conducting capability of the entire electrode sheet, and increases the energy density of the cell. Therefore, the electrode sheet provided by the present disclosure has a promising prospect of application in secondary batteries, and is suitable for application in industrial production.

## Claims

1. An electrode sheet of a secondary battery, the electrode sheet comprising:
a current collector comprising an insulation layer and a conductive layer disposed on each of two opposite sides of the insulation layer, wherein the conductive layer has a first region and a second region, wherein the first region has a thickness greater than a thickness of the second region; and
an active material layer disposed on the second region and a part of the first region that is close to the second region.

2. The electrode sheet according to claim 1, wherein the active material layer extends from a boundary line between the first region and the second region onto the first region by a distance ranging from 1 mm to 5 mm.

3. The electrode sheet according to claim 1, wherein a maximum difference between the thickness of the first region and the thickness of the second region ranges from 1 nm to 600 nm.

4. The electrode sheet according to any one of claims 1 to 3, wherein a maximum difference between the thickness of the first region and the thickness of the second region ranges from 200 nm to 500 nm.

5. The electrode sheet according to claim 1, wherein the insulation layer has a thickness ranging from 1.2 µm to 12 µm.

6. The electrode sheet according to claim 1, wherein the insulation layer has a thickness ranging from 2 µm to 6 µm.

7. The electrode sheet according to any one of claims 1 to 6, wherein the second region comprises a first sub-region and a second sub-region, wherein the thickness of the first region is greater than a thickness of the second sub-region, wherein the first sub-region is located between the first region and the second sub-region and has a thickness increasing gradually in a direction from the second sub-region to the first region, and wherein the active material layer is disposed on the second sub-region, the first sub-region, and a part of the first region that is close to the first sub-region.

8. The electrode sheet according to claim 7, wherein a boundary line between the first region and the first sub-region is defined as a first boundary line, wherein a boundary line between the first sub-region and the second sub-region is defined as a second boundary line, wherein with a plane comprising the first boundary line and the second boundary line as a reference plane, a surface of the first sub-region facing away from the insulation layer is convex relative to the reference plane.

9. The electrode sheet according to claim 8, wherein the surface of the first sub-region facing away from the insulation layer has a cross section of a curve, wherein an included angle between a tangent line of the curve and a surface on which the second sub-region is located ranges from 1° to 80°.

10. The electrode sheet according to claim 8, wherein the surface of the first sub-region facing away from the insulation layer has a cross section of a straight line.

11. The electrode sheet according to any one of claims 1 to 10, the electrode sheet being a negative electrode sheet, wherein the conductive layer comprises a functional layer and a protective layer that overlap, a surface of the functional layer facing away from the protective layer being connected to a surface of the insulation layer, and a thickness of the functional layer at the first region being greater than a thickness of the functional layer at the second region, and wherein a surface of the protective layer at the second region and a surface of the protective layer at the part of the first region that is close to the second region are both coated with a negative active material layer.

12. The electrode sheet according to claim 11, wherein the thickness of the functional layer at the first region ranges from 100 nm to 2,500 nm, and wherein the thickness of the functional layer at the second region ranges from 50 nm to 2,000 nm.

13. The electrode sheet according to claim 11, wherein the thickness of the functional layer at the first region ranges from 600 nm to 1,500 nm, and wherein the thickness of the functional layer at the second region ranges from 300 nm to 1,000 nm.

14. The electrode sheet according to any one of claims 11 to 13, wherein a maximum difference between the thickness of the functional layer at the first region and the thickness of the functional layer at the second region ranges from 1 nm to 600 nm.

15. The electrode sheet according to any one of claims 11 to 14, wherein a maximum difference between the thickness of the functional layer at the first region and the thickness of the functional layer at the second region ranges from 200 nm to 500 nm.

16. The electrode sheet according to any one of claims 11 to 15, wherein a difference between the thickness of the functional layer at the first region and the thickness of the functional layer at the second region is a constant value or a gradually changing value.

17. The electrode sheet according to any one of claims 11 to 16, wherein the functional layer has a thickness decreasing abruptly or changing gradually from the first region to the second region.

18. The electrode sheet according to claim 11, wherein the second region comprises a first sub-region and a second sub-region, wherein the thickness of the first region is greater than a thickness of the second sub-region, wherein the first sub-region is located between the first region and the second sub-region and has a thickness increasing gradually in a direction from the second sub-region to the first region, and wherein the negative active material layer is disposed on a surface of the protective layer at the second sub-region, a surface of the protective layer at the first sub-region, and a surface of the protective layer at a part of the first region that is close to the first sub-region.

19. The electrode sheet according to claim 11, further comprising a bonding layer disposed between the functional layer and the insulation layer.

20. The electrode sheet according to claim 19, wherein the bonding layer has a thickness ranging from 1 nm to 100 nm.

21. The electrode sheet according to claim 19, wherein the bonding layer has a thickness ranging from 3 nm to 40 nm.

22. The electrode sheet according to any one of claims 19 to 21, wherein the bonding layer is a metallic layer or a non-metallic layer.

23. The electrode sheet according to claim 22, wherein the metallic layer is made of a raw material selected from Ni, Cr, an Ni alloy, or a Cr alloy.

24. The electrode sheet according to claim 23, wherein the Ni alloy comprises an NiCu alloy, an NiCr alloy, or an NiV alloy.

25. The electrode sheet according to claim 24, wherein the NiCu alloy consists of, in mass percent, 20% to 40% Ni and 60% to 80% Cu.

26. The electrode sheet according to claim 24 or 25, wherein the NiCr alloy consists of, in mass percent, 10% to 30% Ni and 70% to 90% Cr.

27. The electrode sheet according to any one of claims 24 to 26, wherein the NiV alloy consists of, in mass percent, 80% to 95% Ni and 5% to 20% V.

28. The electrode sheet according to claim 23, wherein the Cr alloy comprises a CrCu alloy, a CrV alloy, or a CrCo alloy.

29. The electrode sheet according to claim 28, wherein the CrCu alloy consists of, in mass percent, 10% to 40% Cr and 60% to 90% Cu.

30. The electrode sheet according to claim 28 or 29, wherein the CrV alloy consists of, in mass percent, 40% to 80% Cr and 20% to 60% V.

31. The electrode sheet according to any one of claims 28 to 30, wherein the CrCo alloy consists of, in mass percent, 60% to 90% Cr and 10% to 40% Co.

32. The electrode sheet according to claim 22, wherein the non-metallic layer is made of a raw material selected from polytetrafluoroethylene (PTFE), polypropylene (PP), polyethylene (PE), SiC, Si3N4, SiOx, AlOy, melamine, or a combination thereof, where 1.5≤x≤2, and 1≤ y≤1.5.

33. A secondary battery, comprising the electrode sheet of the secondary battery according to any one of claims 1 to 32.

34. A preparation method for the electrode sheet of the secondary battery according to any one of claims 1 to 32, the preparation method comprising:
forming the conductive layer on each of two sides of the insulation layer, the conductive layer having the first region and the second region, wherein the thickness of the first region is greater than the thickness of the second region; and
coating the second region and the part of the first region that is close to the second region with an active material to form the active material layer.

35. The preparation method according to claim 34, further comprising:
disposing a baffle between a metal source and a part of the insulation layer corresponding to the first region and the second region, the baffle comprising a shielding portion and a hollow portion, wherein an occupation ratio of the hollow portion of the baffle corresponding to the first region is greater than an occupation ratio of the hollow portion of the baffle corresponding to the second region.

36. The preparation method according to claim 35, wherein an occupation ratio of the hollow portion of the baffle gradually increases in a direction from a part of the baffle corresponding to the second region to a part of the baffle corresponding to the first region.
